# EUROPEAN PATENT SPECIFICATION

(11) **EP 0 438 988 B1**
(45) Date of publication and mention of the grant of the patent: **10.11.1993**
(21) Application number: 90830597.2
(22) Date of filing: 18.12.1990
(51) Int. Cl.: B23K 37/04, B62D 65/00, B23P 21/00

(54) **A system for welding together pressed sheet-metal structures, particularly small subassemblies of the bodywork or mechanical parts of motor vehicles**
System zum Zusammenschweissen von Strukturen gepresster Bleche, insbesondere kleiner Karosserienbaugruppen oder mechanischer Teile von Motorfahrzeugen
Système pour souder ensemble des structures en tôle pressée, particulièrement des petits sous-assemblages de carrosserie ou des parties mécaniques de véhicule à moteur

(30) Priority: 24.01.1990 IT 6705190
(43) Date of publication of application: 31.07.1991
(73) Proprietor: FIAT AUTO S.p.A., 10135 Torino (IT)
(72) Inventor: Guasco, Luciano, I-10133 Torino (IT)
(74) Representative: Quinterno, Giuseppe

(56) References cited:
- GB-A- 2 176 445
- US-A- 4 611 749

## Description

The present invention relates to systems for welding together pressed sheet-metal structures, particularly small subassemblies of the bodywork or mechanical parts of motor vehicles.

In the automotive industry, the welding together of small subassemblies of pressed sheet-metal, such as for example, small subassemblies of the bodywork, or mechanical parts such as suspension arms or the like, is currently carried out with the use of so-called welding "presses" which have dies adapted to the specific configuration of the structure to be welded and a plurality of electrodes for simultaneously executing a series of electrical spot welds. Presses of this type can operate on different structures after the dies which are associated with the fixed and movable parts of the press have been replaced. Although a very flexible system is thus obtained, there are, on the other hand, disadvantages in the quality of the products produced as well as the high level of noise produced when the welded structures are discharged from the press. The structures are discharged simply by being dropped on to the floor and, as well as a high level of noise, this involves the risk of permanent deformation of the welded structures. The provision of a line of presses of this type also involves considerable use of manpower for the loading and discharge of the pieces. In addition, quite a long time is needed to adapt the presses to a different type of structure and it is consequently necessary to have a large number of welded pieces always available in store.

In an attempt to avoid the said problems, the Applicant has experimented with the use of sound-deadening panels and walls to sound-proof the output region of the press and has also installed automatic output manipulators. These actions, however, weighed heavily on machinery costs and the time needed to replace the dies. Moreover, the noise level remained quite high and the costs due to handling and storage of the finished elements remained.

In order to solve the said problem effectively, the invention provides a system for welding together pressed sheet-metal structures, particularly small subassemblies of the bodywork or mechanical parts of motor vehicles, comprising:
a first supply zone having a plurality of palletisable containers containing stocks of respective components of a first type of structure to be welded,
a second supply zone having a plurality of palletisable containers containing stocks of respective components of a second type of structure to be welded,
a welding and handling robot situated at a point intermediate the two supply zones,
two assembly stations on opposite sides of the robot and adjacent the two supply zones respectively, each assembly station comprising a table rotatable about a vertical axis and including at least two separate portions each provided with respective locating and clamping means for the provisional assembly of the components constituting a structure to be welded; the locating and clamping means provided on the two rotatable tables being adapted for use with the two said types of structure to be welded, respectively,
each rotatable table being able to be stopped in at least two different positions in each of which a portion of the rotatable table faces the respective supply zone so that it can be loaded with various components taken from the supply zone thus enabling a structure which is to be welded to be assembled provisionally and clamped thereon, whilst another part faces the robot so as to present thereto a preassembled structure to be welded,
an output zone situated to one side of the region between the two supply zones and comprising a plurality of palletisable containers for receiving the welded structures, as well as means for enabling the containers to be moved from an input position, where the empty containers arrive in succession, to an operative position in which a container can receive the welded structures, and from the operative position to an output position from which the full containers are removed in succession.

In a variant, an auxiliary welding and handling robot is provided for effecting an additional number of spot welds on the structure welded by the main robot; in this case, the system includes an auxiliary fixed table for supporting the structure during the welding by the auxiliary robot. The main robot transfers the pieces it has welded to the auxiliary fixed table whilst the auxiliary robot transfers the welded piece from the auxiliary fixed table to the output zone upon completion of the welding.

By virtue of the said characteristics, the system according to the invention on the one hand ensures that the installation is extremely flexible and, on the other hand, overcomes all the problems of the prior art described above.

Whenever it is wished to produce a type of structure different from the two types for which the rotatable tables are arranged initially, it suffices to adapt one of the tables whilst the other is in operation so that there is no adverse effect on production times whatsoever. The problems connected with the high level of noise produced by the welding presses in current use are completely overcome. Very little manpower is required. If the structures to be welded are assembled manually on the rotatable tables, it in fact suffices to provide a single operator adjacent each rotatable table to take the elements of the structure to be welded from the various containers in the supply area and to assemble them on the rotatable table. The program of the welding robot is changed according to the type of structure to be welded. As well as providing great flexibility, the use of the robot also ensures that very high quality products are produced. Moreover, there is no risk of the welded structures being deformed by accidental knocks since the robot itself deposits the welded structures in the palletisable containers in the output zone.

The particular shape and arrangement of the system according to the invention also enables structures of different types to be produced in successive batches, with considerable saving in the storage and handling of the pieces compared with the current technique.

Further characteristics and advantages of the invention will become clear from the description which follows with reference to the appended drawings, provided purely by way of non-limiting example, in which:
Figure 1 is a schematic perspective view of a first embodiment of the system according to the invention, and
Figure 2 is a schematic perspective view of a second embodiment of the system accoridng to the invention.

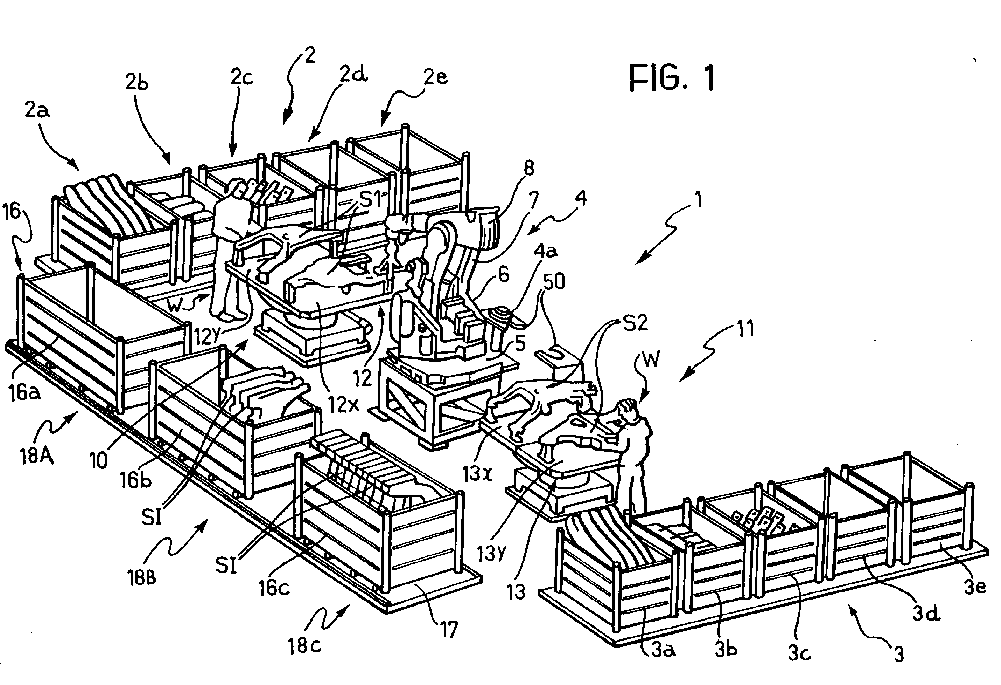

In Figure 1, reference 1 generally indicates a system for the electrical spot welding of small pressed sheet-metal subassemblies intended to form parts of the bodywork or mechanical parts of motor vehicles. The assembly system 1 is managed to act at any one time on two different types of structure to be welded and can be adapted to act on any other type of structure without any slowing of the production rate.

The system 1 includes two supply zones 2, 3 in which there are a plurality of palletisable containers 2a, 2b, 2c, 2d, 2e and 3a, 3b, 3c, 3d, 3e, each containing a stock of a respective component of the structure to be assembled. The containers in the supply zone 2 contain the components of a first type S1 of structure on which the system is arranged to act. The containers of the supply zone 3, however, contain the components of a second structure type S2 . An anthropomorphic robot 4 is positioned in a region intermediate the two supply zones 2, 3. The robot 4 is neither described nor illustrated in detail in the present description and appended drawings since it may be of any known type and does not fall within the scope of the present invention.

The robot 4 may, for example, be of the type marketed under the trade mark "SMART" by the Italian company COMAU S.p.A. Essentially, this robot comprises a base platform 5, a lower structure 6 rotatable on the base platform 5 about a vertical axis, and a pair of articulated arms 7, 8 terminating in wrists 9 which are rotatable about their longitudinal axes and to which operating members are, in turn, articulated.

In the case of the present invention, the robot's wrist can be coupled either to a welding head for effecting electrical spot welds or to a gripping member, for example of the type with suction cups, for gripping and transporting the structures after welding. The welding head and the gripping member can be positioned on supports 50 adjacent the robot which itself replaces the tool when necessary.

Two assembly stations (10, 11) are provided, one on each side of the robot 4, in regions adjacent the two supply zones 2, 3 and each comprises a table 12, 13, rotatable about a vertical axis 12a, 13a. Each of the two rotatable tables 12, 13 includes two separate portions 12x, 12y; 13x, 13y situated on opposite sides of the central axis of rotation. Each portion has a plurality of locating and clamping means which enable components taken from the respective supply zone to be assembled provisionally into a structure on the said portion and clamped. The locating and clamping means of the two portions 12x, 12y of the rotatable table 12 are arranged to receive components taken from the supply zone 2. The locating and clamping means (indicated 15) of the two portions of the rotatable table 13 are arranged to receive components taken from the supply zone 3.

Each of the two rotatable tables 12, 13 can be stopped in two different working positions. In each of these positions, one of the two portions faces the respective supply zone, so that it can be loaded by an operator W with the various components of a structure to be assembled. At the same time, the other portion faces the welding and handling robot 4 so that it presents the robot with a preassembled structure which has been clamped to the table. In Figure 1, the rotatable tables are shown with the various structures S1, S2 already loaded thereon. In the case of the table 13, an operator W is shown completing the loading of components taken from the supply zone 3 on to the locating and clamping means 15 of the portion 13y of the rotatable table 13 which faces the supply zone 3.

Finally, the system 1 includes an output zone 16 to one side of the region between the two supply zones 2, 3. The output zone has a plurality of palletisable containers 16a, 16b, 16c for receiving the welded structures. The palletisable containers are supported on a roller table 17 so that they can be moved from an input position 18A, at which empty containers arrive in succession, to an operative position 18B in which the container is loaded with the welded structures until it is full, and from the operative position 18B to an output position 18C from which the full containers are removed.

The assembly system described above operates as follows.

The operator W takes the various components of a structure to be welded from the respective supply zone, for example from the supply zone 3, and positions them on the portion of the respective rotatable table (for example, the table 3) which faces the supply zone. Once the structure to be welded has been assembled provisionally and clamped to the table 13, the operator gives his consent for the start of the operating cycle. At this point, the table 13 is rotated through 180° so as to present the structure which has just been assembled provisionally to the robot 4. After putting down the gripping tool 52 and picking up the welding head 51, the robot can then effect a plurality of electrical spot welds on the structure S2 on the portion 13y. The structure S2 which is situated on the portion 13x of the rotatable table 13 facing the robot whilst the operator W is assembling a new structure to be welded is transferred by the robot itself, on completion of the welding, from the rotatable table 13 to the container 16b located in the position 18B, before the said rotation of the table 13. When the operator W causes the table 13 to rotate through 180°, therefore, the portion 13x of the table 13 which arrives in front of the operator is empty again. The operator can therefore proceed with the loading of a new structure S2, taking the various components from the supply zone 3, whilst the robot 4 welds the structure S2 located on the portion 13y facing the robot and then transfers it, upon completion of the welding, to the container 16b.

Once the container 16b has been filled with a plurality of structures S2 which have been assembled on the table 13, the container which has just been filled is moved to the output position 18c and an empty container 16a is brought to the operative position 18B. At this stage it may be decided to fill the new empty container with another series of structures S2 assembled on the table 13 or, alternatively, to fill it with a series of structures S1 of a different type assembled on the table 12. In the latter case, the robot turns towards the table 12 and operates in exactly the same way as described above with reference to the table 13. Obviously, in this case, an operator must take the components from the supply zone 2 and assemble them on the portion of the rotatable table 2 which is facing the supply zone at the time in question.

When it is decided to adapt the assembly system to operate on a third, different type of structure to be welded, the adaptation can be carried out without loss of production speed. In fact, whilst the robot is operating on one of the two rotatable tables to fill up a container situated in the operative position 18B, the other rotatable table can be provided with locating and clamping means suitable for the new type of structure to be welded. Obviously, it is also necessary for the containers in the respective supply zone to be replaced by new containers with the components of the new structure to be welded. When these operations have been completed, the robot 4 can turn towards the table 13 and start to operate in a manner similar to that described above on the new type of structure to be welded.

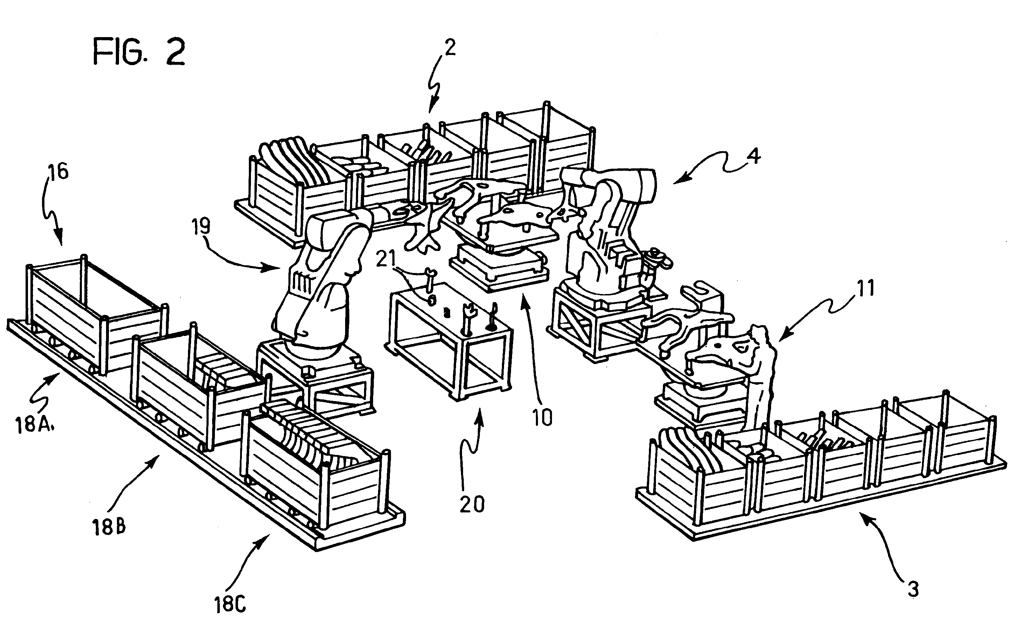

Figure 2 shows a second embodiment of the assembly system according to the invention. In this drawing, parts identical or corresponding to those of Figure 1 are indicated by the same reference numerals.

The main difference with respect to the embodiment shown in Figure 1 lies in the fact that, in this case, the system includes an auxiliary robot 19 of a similar type to the robot 4. The robot 4 takes the structures it has welded and places them on an auxiliary fixed table 20 provided with the necessary locating means 21 to enable an additional series of spot welds to be executed on the structure by the robot 19. Once the additional spot welds have been executed, the auxiliary robot 19 takes the welded structure and places it in the container situated in the operative position 18B of the output zone 16.

The solution of Figure 2 is necessary when the configuration of the structure to be welded is quite complex and needs quite a large number of spot welds. The use of two robots enables the welding to be carried out more easily (for example, during its transfer from one of the two rotatable tables (12, 13) to the fixed table 20, the piece may be turned round to enable the additional spot welds to be executed more easily). Moreover, operating times are reduced.

It is clear from the above description that, on the one hand, the system according to the invention provides a high degree of flexibility since it can quickly and easily be adapted to new production requirements and, on the other hand, it enables a good-quality product to be produced without the problems of noise and the risk of finished pieces being knocked which occur with the current technique. Little manpower is required and this also results in reduced management costs.

Naturally, the principle of the invention remaining the same, the details of construction and forms of embodiment may be varied widely with respect to those described and illustrated purely by way of example, without thereby departing from the scope of the present invention.

## Claims

1. A system for welding together pressed sheet-metal structures, particularly small subassemblies (S1, S2) of the bodywork or mechanical parts of motor vehicles, comprising:
a first supply zone (2) having a plurality of palletisable containers (2a, 2b, 2c, 2d, 2e) containing stocks of respective components of a first type (S1) of structure to be welded,
a second supply zone (3) having a plurality of palletisable containers (3a, 3b, 3c, 3d, 3e) containing stocks of respective components of a second type (S2) of structure to be welded,
a welding and handling robot (4) situated at a point intermediate the two supply zones (2, 3),
two assembly stations (10, 11) on opposite sides of the robot (4) and adjacent the two supply zones (2, 3), respectively, each assembly station (10, 11) comprising a table (12, 13) rotatable about a vertical axis and including at least two separate portions (12x, 12y, 13x, 13y) each provided with respective locating and clamping means (14, 15) for the provisional assembly of the components constituting a structure to be welded; the locating and clamping means (14, 15) provided on the two rotatable tables (12, 13) being adapted for use with the two said types of structure to be welded, respectively,
each rotatable table (12, 13) being able to be stopped in at least two different positions in each of which a portion of the rotatable table faces the respective supply zone so that it can be loaded with various components taken from the supply zone, thus enabling a structure to be welded to be assembled provisionally and clamped thereon, whilst another portion faces the robot (4) so as to present thereto a preassembled structure to be welded,
an output zone (16) situated to one side of the region between the two supply zones (2, 3) and comprising a plurality of palletisable containers (16a, 16b, 16c) for receiving the welded structures, and means (17) for enabling the containers (16a, 16b, 16c) to be moved from an input position (18A), where the empty containers arrive in succession, to an operative position (18B) in which a container can receive the welded structures, and thence to an output position (18C) from which the full containers are removed in succession,
the welding and handling robot (4) being arranged and programmed to effect a sufficient number of electrical spot welds on each structure to be welded to provide it with a stable geometry and, after the release of the locating and clamping means of the respective rotatable table, to transport the structure to the operative position (18B) of the output zone (16).

2. A system according to Claim 1, characterised in that it includes an auxiliary welding robot for executing an additional number of spot welds on the structure welded by the main robot, the system further including an auxiliary fixed table (20) provided with means for supporting and locating the structure during the execution of the additional spot welds by the auxiliary robot (19); the auxiliary robot (19) being arranged to pick up the structure it has welded and to carry it to the container situated in the operative position (18B) of the output zone (16).

3. A system according to Claim 1, characterised in that each rotatable table (12, 13) has two distinct portions situated on opposite sides of its axis of rotation (12a, 13a) and is rotatable through 180° in order to place the two portions facing the respective supply zone and the robot (4) selectively .

## Patentansprüche

1. System zum Zusammenschweißen von Stukturen gepreßter Bleche, insbesondere kleiner Karosseriebaugruppen (S1,S2) oder mechanischer Teile von Kraftfahrzeugen, umfassend:
eine erste Lieferzone (2) mit einer Mehrzahl von palettierbaren Behältern (2a,2b,2c,2d,2e), welche Lagerbestände von entsprechenden Komponenten eines ersten Typs (S1) einer zu schweißenden Struktur enthalten,
eine zweite Lieferzone (3) mit einer Mehrzahl von palettierbaren Behältern (3a,3b,3c,3d,3e), welche Lagerbestände von entsprechenden Komponenten eines zweiten Typs (S2) einer zu schweißenden Struktur enthalten,
einen Schweiß- und Handhabungsroboter (4), der sich an einem Punkt zwischen den zwei Lieferzonen (2,3) befindet,
zwei Zusammenbaustationen (10,11) an entgegengesetzten Seiten des Roboters (4) und jeweils in der Nähe der zwei Lieferzonen (2,3), wobei jede Zusammenbaustation (10,11) einen um eine vertikale Achse drehbaren Tisch (12,13) umfaßt, der wenigstens zwei getrennte Abschnitte (12x,12y,13x,13y) aufweist, von denen jeder mit entsprechenden Festlegungs- und Klemmitteln (14,15) zum provisorischen Zusammenbau der eine zu schweißende Struktur bildenden Komponenten ausgestattet ist; wobei die Festlegungs- und Klemmittel (14,15) an den zwei drehbaren Tischen (12,13) vorgesehen sind, welche jeweils zur Verwendung mit den zwei zu schweißenden Strukturtypen angepaßt sind,
wobei jeder drehbare Tisch (12,13) in wenigstens zwei unterschiedlichen Positionen gestoppt werden kann, von denen in jeder ein Abschnitt des drehbaren Tisches der entsprechenden Lieferzone gegenuberliegt, so daß er mit verschiedenen, aus der Lieferzone entnommenen Komponenten beschickt werden kann, wodurch es möglich ist, eine zu schweißende Struktur provisorisch zusammenzubauen und darauf festzuklemmen, während ein weiterer Abschnitt dem Roboter (4) derart gegenüberliegt, daß er diesem eine vorzusammengebaute zu schweißende Struktur darbietet,
eine an einer Seite des Bereichs zwischen den zwei Lieferzonen (2,3) befindliche Ausgabezone (16), welche eine Mehrzahl von palettierbaren Behältern (16a,16b,16c) zum Aufnehmen der geschweißten Strukturen aufweist, und Mittel (17), welche es ermöglichen, daß die Behälter (16a,16b,16c) von einer Eingabeposition (18A), in der die leeren Behälter aufeinanderfolgend ankommen, zu einer Betriebsposition (18B) bewegt werden, in der ein Behälter die geschweißten Strukturen aufnehmen kann, und dann zu einer Ausgabeposition (18C) bewegt werden, von der die vollen Behälter aufeinanderfolgend entfernt werden,
wobei der Schweiß- und Handhabungsroboter (4) dazu ausgelegt und programmiert ist, eine ausreichende Anzahl von elektrischen Punktschweißungen an jeder zu schweißenden Struktur durchzuführen, um ihr eine stabile Geometrie zu geben, und nach dem Lösen der Festlege- und Klemmittel des entsprechenden drehbaren Tischs die Struktur zu der Betriebsposition (18B) der Ausgabezone (16) zu transportieren.

2. System nach Anspruch 1, **dadurch gekennzeichnet**, daß es einen Zusatzschweißroboter zur Ausführung einer zusätzlichen Anzahl von punktschweißungen auf der durch den Hauptroboter geschweißten Struktur umfaßt, wobei das System weiterhin einen feststehenden Zusatztisch (20) aufweist, der mit Mitteln zum Tragen und Festlegen der Struktur während der Ausführung der zusätzlichen Punktschweißungen durch den Zusatzroboter (19) ausgestattet ist; wobei der Zusatzroboter (19) dazu ausgelegt ist, die Struktur, die er geschweißt hat, aufzunehmen und sie zu dem sich in der Betriebsposition (18B) der Ausgabezone (16) befindenden Behälter zu tragen.

3. System nach Anspruch 1, **dadurch gekennzeichnet**, daß jeder drehbare Tisch (12,13) zwei unterschiedliche Abschnitte aufweist, die an entgegengesetzten Seiten seiner Rotationsachse (12a,13a) liegen, und um 180° drehbar ist, um die zwei Abschnitte der Lieferzone bzw. dem Roboter (4) gegenüberliegend selektiv anzuordnen.

## Revendications

1. Système destiné à assembler par soudage des structures en tôle emboutie, en particulier de petits sous-ensembles (S1, S2) de la caisse ou des éléments mécaniques de véhicules automobiles, comprenant :
une première zone d'alimentation (2) comprenant une pluralité de conteneurs palettisables (2a, 2b, 2c, 2d, 2e) contenant des stocks de composants respectifs d'un premier type (S1) de structure à souder,
une deuxième zone d'alimentation (3) comprenant une pluralité de conteneurs palettisables (3a, 3b, 3c, 3d, 3e) contenant des stocks d'éléments respectifs d'un deuxième type (S2) d'éléments à souder ;
un robot de soudage et de manipulation (4) situé en un point intermédiaire entre les deux zones d'alimentation (2, 3),
deux postes d'assemblage (10, 11) situés de part et d'autre du robot (4) et respectivement adjacents aux deux zones d'alimentation (2, 3), chaque poste d'assemblage (10, 11) comprenant une table (12, 13) pouvant tourner autour d'un axe vertical et comprenant au moins deux parties séparées (12x, 12y, 13x, 13y) dont chacune est munie de moyens respectifs de positionnement et de bridage (14, 15) servant pour l'assemblage provisoire des composants constituant une structure à souder ; les moyens de positionnement et de bridage (14, 15) prévus sur les deux tables tournantes (12, 13) étant adaptés pour être utilisés respectivement avec les deux types de structures à souder ;
chaque table tournante (12, 13) pouvant être arrêtée en au moins deux positions différentes dans chacune desquelles une partie de la table tournante fait face à la zone d'alimentation respective, de sorte qu'elle peut être chargée avec différents composants pris dans la zone d'alimentation, en permettant ainsi à une structure à souder d'être assemblée provisoirement et bridée sur cette partie, tandis qu'une autre partie fait face au robot (4) de manière à lui présenter une structure pré-assemblée à souder,
une zone de sortie (16) située d'un côté de la région comprise entre les deux zones d'alimentation (2, 3) et comprenant une pluralité de conteneurs palettisables (16a, 16b, 16c) destinés à recevoir les structures à souder, ainsi que des moyens (17) destinés à permettre aux conteneurs (16a, 16b, 16c) d'être amenés d'une position d'entrée (18A), dans laquelles les conteneurs vides arrivent successivement, à une position de travail (18B), dans laquelle un conteneur peut recevoir les structures soudées, et, de là, à une position de sortie (18C) d'où les conteneurs pleins sont évacués successivement,
le robot de soudage et de manipulation (4) étant agencé et programmé pour exécuter sur chaque structure à souder un nombre de soudures par points suffisant pour lui conférer une géométrie stable, et pour transporter la structure à la position de travail (18B) de la zone de sortie (16) après avoir desserré les moyens de chargement et de bridage de la table tournante respective.

2. Système selon la revendication 1, caractérisé en ce qu'il comprend un robot de soudage auxiliaire destiné à exécuter un nombre additionnel de soudures par points sur la structure qui a été soudée par le robot principal, le système comprenant en outre une table auxiliaire fixe (20) équipée de moyens destinés à supporter et à positionner la structure pendant l'exécution de soudures par points additionnelles par le robot auxiliaire (19) ; le robot auxiliaire (19) étant agencé pour saisir la structure qu'il a soudée et la transporter au conteneur situé dans la position de travail (18B) de la zone de sortie (16).

3. Système selon la revendication 1, caractérisé en ce que chaque table tournante (12, 13) comprend deux parties distinctes situées de part et d'autre de son axe de rotation (12a, 13a) et peut tourner de 180° pour placer sélectivement les deux parties face à la zone d'alimentation respective ou face au robot (4).
